# EUROPEAN PATENT APPLICATION

(11) **EP 4 778 792 A1**
(43) Date of publication of application: **22.07.2026**
(21) Application number: 24888296.1
(22) Date of filing: 10.07.2024
(51) Int. Cl.: B60T 8/171, B60T 8/34

(54) **VEHICLE CONTROL DEVICE**

(30) Priority: 06.11.2023 JP 2023189675
(71) Applicant: Astemo, Ltd., Chiyoda-ku, Tokyo 1000004 (JP)
(72) Inventor: ATSUTA, Daiki, Hitachinaka-shi, Ibaraki 312-8503 (JP); TSUCHIYA, Tomoharu, Hitachinaka-shi, Ibaraki 312-8503 (JP)
(74) Representative: Kiwit, Benedikt
(86) International application number: PCT/JP2024/024959
(87) International publication number: WO 2025/099994

(57) **Abstract**

A vehicle control device (1) includes a control board (30) accommodated in a housing (20) fixed to a base body (10) and a sensor (60) that detects movement of a vehicle. The sensor (60) is attached to the control board (30) in a range close to a first side surface (12) and a second side surface (13) of the base body (10) supported by a vehicle body (3). In this configuration, an influence of vibration on the sensor (60) attached to the control board (30) can be effectively prevented with a simple configuration, and detection accuracy of the sensor (60) can be improved.

## Description

### Technical Field

The present invention relates to a vehicle control device.

### Background Art

In the related art, as a vehicle control device that controls movement of a vehicle, there is a vehicle control device that includes an inertial measurement unit (IMU) including an inertial measurement sensor that detects acceleration and an angular velocity of the vehicle, and executes various types of control such as anti-locking braking control and vehicle posture control using a detection result of the IMU. Further, as the vehicle control device, there is a vehicle control device in which an angular velocity sensor or an acceleration sensor is attached to a control board (ECU) accommodated in a housing fixed to a base body to have a function equivalent to that of the inertial measurement sensor (for example, see PTL 1).

### Citation List

### Patent Literature

PTL 1: JP2021-88328A

### Summary of Invention

### Technical Problem

When the inertial measurement sensor is attached to the control board, an elastic component is interposed between the control board and the base body in order to prevent an influence of vibration, caused by driving of an engine or traveling of the vehicle, on a detection result of the inertial measurement sensor. In this configuration, there is a problem that the number of components of the vehicle control device increases.

An object of the invention is to provide a vehicle control device capable of effectively preventing an influence of vibration on a sensor attached to a control board with a simple configuration and improving detection accuracy of the sensor.

### Solution to Problem

In order to solve the above problem, the invention is a vehicle control device including a control board accommodated in a housing fixed to a base body, and a sensor configured to detect movement of a vehicle. The sensor is attached to the control board in a range close to a portion where the base body is supported by a vehicle body.

### Advantageous Effects of Invention

In the vehicle control device according to the invention, an influence of vibration on the sensor attached to the control board can be effectively prevented with a simple configuration, and measurement accuracy of the sensor can be improved.

### Brief Description of Drawings

[FIG. 1] FIG. 1 is a side cross-sectional view showing a vehicle control device according to an embodiment of the invention.
[FIG. 2] FIG. 2 is a diagram showing an inside of a housing of the vehicle control device according to the embodiment of the invention as viewed from an end surface side of a base body.
[FIG. 3] FIG. 3 is a diagram showing an inside of a housing of a vehicle control device according to a modification of the embodiment of the invention as viewed from an end surface side of a base body.

### Description of Embodiments

An embodiment according to the invention will be described in detail with reference to the drawings as appropriate.

In the following description, an upper-lower direction, a front-rear direction, and a left-right direction are set for convenience in describing a vehicle control device according to the present embodiment. Those directions do not limit a configuration of the vehicle control device according to the invention or an assembled state to the vehicle.

The vehicle control device according to the present embodiment will be described by taking a brake control device used in a bar-handle vehicle such as a motorcycle or a motor tricycle as an example. The vehicle control device according to the present embodiment can be used for a brake control device of a four-wheeled vehicle or various vehicle control devices.

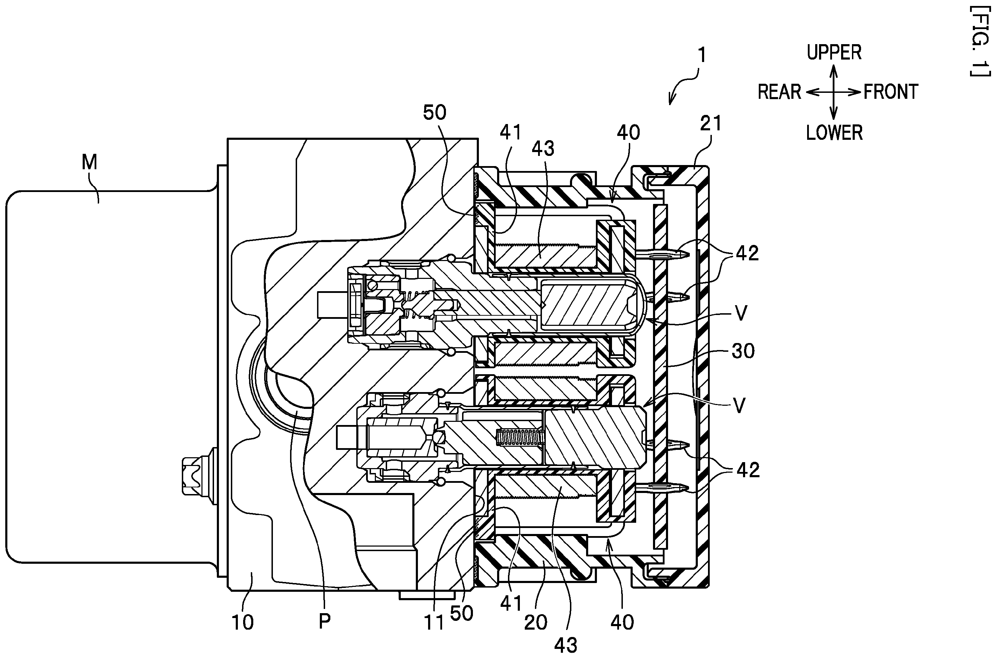

As shown in FIG. 1, a vehicle control device 1 according to the present embodiment includes a base body 10, a housing 20 fixed to the base body 10, and a control board 30 accommodated in the housing 20.

The vehicle control device 1 is connected between a master cylinder and a wheel brake of a vehicle, and executes various types of control such as anti-locking braking control and vehicle posture control by controlling a brake hydraulic pressure acting on the wheel brake.

The base body 10 is a metal component formed in a substantially rectangular parallelepiped shape. A brake fluid passage (oil passage) is formed inside the base body 10. A plurality of solenoid valves V, a motor M, a reciprocating pump P, and the like are assembled to the base body 10.

The housing 20 is attached to an end surface 11 among surfaces of the base body 10. Bottomed attachment holes to which the solenoid valves V are mounted are formed in the end surface 11. A base portion of each of the solenoid valves V is inserted into a corresponding one of the attachment holes, and a portion on a tip side of the solenoid valve V protrudes from the end surface 11.

The number of solenoid valves V assembled to the base body 10 varies depending on, for example, the number of wheels of a target vehicle or a control function.

In the solenoid valve V, a coil assembly 40 is mounted on the portion protruding from the end surface 11.

The coil assembly 40 is an electrical component externally fitted to the solenoid valve V in a state of surrounding the solenoid valve V. The coil assembly 40 includes a bobbin 41, connection terminals 42, and a coil 43. Energizing the coil 43 of the coil assembly 40 drives a valve body of the solenoid valve V to open and close the solenoid valve V.

The bobbin 41 is a cylindrical resin component (insulating component). A base portion of each of the connection terminals 42 is embedded in a front end portion of the bobbin 41 by insert molding.

A conductive wire constituting the coil 43 is wound around the bobbin 41. An end portion of the conductive wire of the coil 43 is wound around each of the connection terminals 42, and the coil 43 and the connection terminals 42 are electrically connected.

The coil assembly 40 is fixed to the end surface 11 of the base body 10 with an adhesive 50. That is, the adhesive 50 is interposed between the coil assembly 40 and the end surface 11 of the base body 10. The adhesive 50 has a sealing function, and has a property of serving as an elastic body by being cured after application. That is, the adhesive 50 is cured in a state of having elasticity (cushioning property). As the adhesive 50, for example, a silicone-based adhesive can be used.

The housing 20 is a resin box fixed to the end surface 11 of the base body 10. A front surface (surface opposite to the base body 10 side) and a rear surface (surface on the base body 10 side) of the housing 20 are opened.

The housing 20 is fixed to the end surface 11 by screw fastening in a state of covering the solenoid valves V and the coil assemblies 40.

An opening of the housing 20 on a front side thereof is sealed by a lid body 21 made of resin. The lid body 21 is fixed to a front end surface of the housing 20 by fixing methods such as welding, adhesion, or screw fastening. The control board 30 is accommodated in the housing 20.

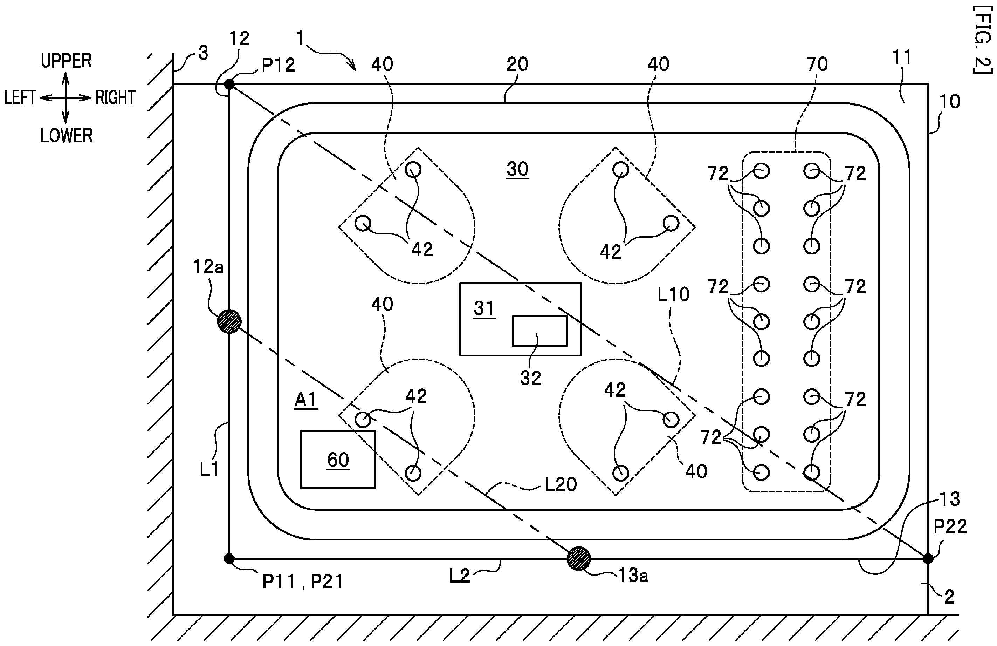

The control board 30 is an electronic control unit (ECU) in which electronic components such as semiconductor chips are attached to a substantially rectangular board main body (see FIG. 2) on which an electric circuit is printed.

The control board 30 is accommodated in a region opposite to the base body 10 side in an internal space of the housing 20. The control board 30 is disposed parallel to the end surface 11 of the base body 10. The coil assemblies 40 are disposed between the control board 30 and the end surface 11 of the base body 10.

As shown in FIG. 2, the control board 30 is provided with a controller 31 that controls movement of the vehicle. The controller 31 controls the movement of the vehicle based on information obtained from a sensor or the like (not shown) provided in the vehicle or a program stored in advance. Specifically, the controller 31 controls the energization to the coil assemblies 40 and the motor M to control opening and closing operations of the solenoid valves V and driving of the motor M.

A sensor 60 that detects the movement of the vehicle is attached to the control board 30. The sensor 60 according to the present embodiment is an inertial measurement sensor that detects acceleration and an angular velocity of the vehicle. Further, the controller 31 includes a calculator 32 that calculates a detection value detected by the sensor 60. Note, the sensor 60 may be at least one of an acceleration sensor and an angular velocity sensor or a combination thereof, instead of the inertial measurement sensor.

A plurality of connection holes into which the connection terminals 42 of the coil assemblies 40 are press-fitted are formed in the control board 30. The control board 30 and the connection terminals 42 of the coil assemblies 40 are electrically connected in a press-fit manner.

The control board 30 is supported by the connection terminals 42 of the coil assemblies 40. That is, the control board 30 is supported by the end surface 11 of the base body 10 via the coil assemblies 40.

A plurality of connection holes into which connection terminals 72 of a connector connection portion 70 are press-fitted are formed in a right region of the control board 30 in FIG. 2. The control board 30 and the connection terminals 72 of the connector connection portion 70 are electrically connected in the press-fit manner.

A connector provided on an external wiring cable is connected to each of the connector connection portions 70. In a vicinity of a connector of the control board, a temperature of a region of the control board 30, particularly a region of the connector connection portion 70, increases due to power supplied to the control board 30.

On the base body 10 according to the present embodiment, a first side surface 12 (left side surface) adjacent to a left side of the end surface 11 and a second side surface 13 (lower surface) adjacent to a lower side of the end surface 11 and a lower side of the first side surface 12 are formed with the end surface 11 facing forward (state in FIG. 1).

A first boundary line L1 (ridge line) is formed between the end surface 11 and the first side surface 12, and a second boundary line L2 (ridge line) is formed between the end surface 11 and the second side surface 13.

When the base body 10 is mounted on the vehicle, the end surface 11 faces forward and the second side surface 13 is disposed on the lower side.

The base body 10 is attached to a vehicle body 3 via a bracket 2. A first support portion 12a to be coupled to the bracket 2 is provided on the first side surface 12 of the base body 10, and a second support portion 13a to be coupled to the bracket 2 is provided on the second side surface 13. The first support portion 12a and the second support portion 13a are fixed to the bracket 2 via mount members (not shown) or by direct screw fastening. In this manner, the first side surface 12 and the second side surface 13 of the base body 10 are supported by the vehicle body 3 via the bracket 2.

In the vehicle control device 1 according to the present embodiment, a first virtual line L10 is set on the first boundary line L1 and the second boundary line L2. Herein, the first virtual line L10 connects end portions P12, P22 respectively on opposite sides of one end portion P11 of the first boundary line L1 and one end portion P21 of the second boundary line L2 which are on a side where the end portions P11, P21 are in contact with each other. The sensor 60 is attached to the control board 30 within a range A2 surrounded by the first boundary line L1, the second boundary line L2, and the first virtual line L10 in a side view (state in FIG. 2) as viewed from the end surface 11 side (front side) of the base body 10.

Further, in the vehicle control device 1 according to the present embodiment, the sensor 60 is attached to the control board 30 within a range A1 surrounded by the first boundary line L1, the second boundary line L2, and a second virtual line L20 connecting the first support portion 12a and the second support portion 13a in the side view (state in FIG. 2) as viewed from the end surface 11 side (front side) of the base body 10.

In the control board 30, the range A1 to which the sensor 60 is attached is a range close to a portion where the base body 10 is supported by the vehicle body 3, and is separated from the connector connection portion 70. That is, the range A1 is set to include a corner portion closest to the first support portion 12a and the second support portion 13a among four corner portions of the control board 30.

In the vehicle control device 1 as described above, since the sensor 60 attached to the control board 30 is disposed in the range A1 close to the portion where the base body 10 is supported by the vehicle body 3, it is possible to effectively prevent an influence of vibration, which is caused by driving of an engine or traveling of the vehicle, on a detection result of the sensor 60. Therefore, in the vehicle control device 1, detection accuracy of the sensor 60 attached to the control board 30 can be improved with a simple configuration without providing a damping component between the control board 30 and the base body 10.

In particular, in a bar-handle vehicle such as a motorcycle or a motor tricycle, the vehicle control device 1 is likely to strongly receive movement of the vehicle or vibration from a prime mover such as an engine. Thus, when the vibration is transmitted to the sensor 60 attached to the control board 30, measurement accuracy of the acceleration or the angular velocity may be impaired, and the sensor 60 itself may be influenced. However, in the vehicle control device 1 according to the present embodiment, the influence of the vibration on the sensor 60 attached to the control board 30 can be effectively prevented with a simple configuration. Further, the measurement accuracy by the sensor 60 can be improved, and toughness against the vibration can be improved.

In the vehicle control device 1 according to the present embodiment, as shown in FIG. 1, the control board 30 is supported by the end surface 11 of the base body 10 via the coil assemblies 40, and the coil assemblies 40 are fixed to the end surface 11 of the base body 10 via the elastic adhesive 50. In this configuration, since the vibration transmitted from the base body 10 to the control board 30 can be prevented by the elastic adhesive 50, the vibration is unlikely to be transmitted to the sensor 60.

In the vehicle control device 1 according to the present embodiment, since the sensor 60 can use various devices such as a calculation device, a power supply device, and a communication device provided on the control board 30 shown in FIG. 2, the number of components can be reduced and a manufacturing cost can be reduced as compared with a case where the sensor 60 and the control board 30 are separately provided. In addition, by using the calculator 32 of the controller 31 of the control board 30, processing can be performed without using a communication device, and thus a speed of processing the detection value detected by the sensor 60 can be increased. Therefore, accuracy of vehicle control is improved.

In the vehicle control device 1 according to the present embodiment, since the sensor 60 on the control board 30 is separated from the connector connection portion 70, the sensor 60 is unlikely to be influenced by the heat generated in the connector connection portion 70 during energization.

Although the embodiment of the invention has been described above, the invention is not limited to the embodiment described above, and can be appropriately modified without departing from the gist of the invention.

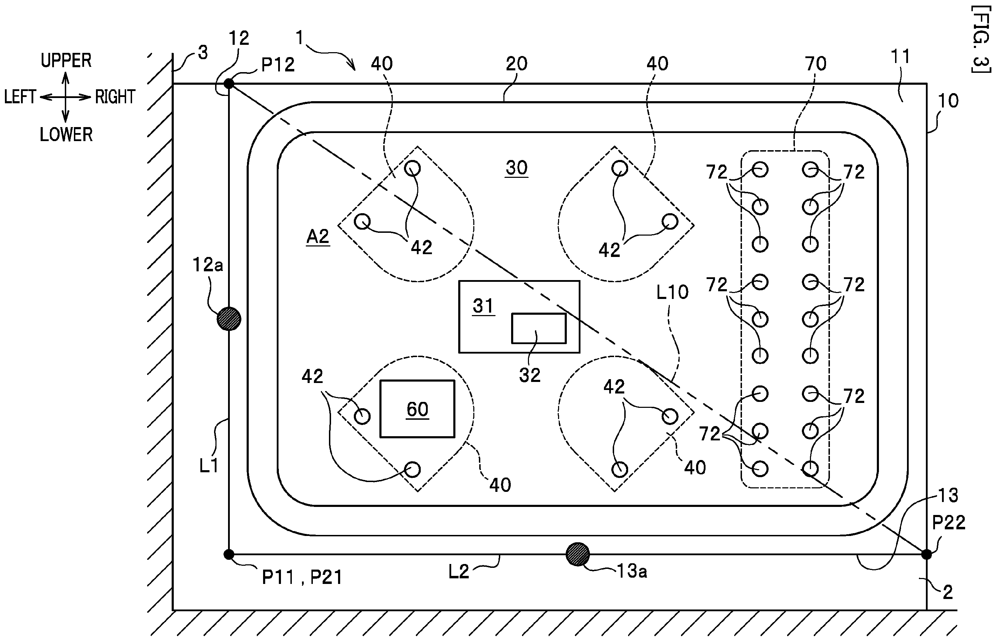

For example, in the vehicle control device 1 shown in FIG. 3, the first virtual line L10 is set on the first boundary line L1 and the second boundary line L2. Herein, the first virtual line L10 connects end portions P12, P22 respectively on opposite sides of one end portion P11 of the first boundary line L1 and one end portion P21 of the second boundary line L2 which are on a side where the end portions P11, P21 are in contact with each other. The sensor 60 is attached to the control board 30 within the range A2 surrounded by the first boundary line L1, the second boundary line L2, and the first virtual line L10 in a side view as viewed from the end surface 11 side of the base body 10.

As shown in FIG. 2, the sensor 60 according to the present embodiment is an inertial measurement sensor that detects both the acceleration and the angular velocity of the vehicle. However, the sensor attached to the control board 30 may be an acceleration sensor that detects the acceleration of the vehicle or an angular velocity sensor that detects the angular velocity of the vehicle.

### Reference Signs List

1: vehicle control device 2: bracket 3: vehicle body 10: base body 11: end surface
12: first side surface 12a: first support portion 13: second side surface 13a: second support portion
20: housing 30: control board 31: controller 32: calculator
40: coil assembly 41: bobbin 42: connection terminal 43: coil 50: adhesive
60: sensor (inertial measurement sensor) 70: connector connection 72: connection terminal
L1: first boundary line L2: second boundary line L10: first virtual line L20: second virtual line
M: motor P: reciprocating pump V: solenoid valve

## Claims

1. A vehicle control device comprising:
a base body;
a housing fixed to an end surface of the base body;
a control board accommodated in the housing; and
a sensor configured to detect movement of a vehicle, wherein
in the base body, a first side surface adjacent to the end surface and a second side surface adjacent to the end surface and the first side surface are supported by a vehicle body, and
the sensor is attached to the control board within a range surrounded by a first boundary line between the end surface and the first side surface, a second boundary line between the end surface and the second side surface, and a first virtual line connecting end portions of the first boundary line and the second boundary line, in a side view as viewed from a side of the end surface.

2. The vehicle control device according to claim 1, wherein
a first support portion to be coupled to the vehicle body is provided on the first side surface, and
a second support portion to be coupled to the vehicle body is provided on the second side surface.

3. The vehicle control device according to claim 2, wherein
the sensor is attached to the control board within a range surrounded by the first boundary line, the second boundary line, and a second virtual line connecting the first support portion and the second support portion in the side view as viewed from the side of the end surface.

4. The vehicle control device according to claim 1, wherein
the sensor includes at least one of an acceleration sensor that detects acceleration of the vehicle and an angular velocity sensor that detects an angular velocity of the vehicle.

5. The vehicle control device according to claim 1, wherein
the sensor includes at least one inertial measurement sensor that detects acceleration and an angular velocity of the vehicle.

6. The vehicle control device according to claim 1, wherein
an electrical component is accommodated in the housing,
the electrical component includes a connection terminal electrically connected to the control board,
the control board is supported by the connection terminal,
the electrical component is fixed to the end surface of the base body with an adhesive, and
the adhesive has elasticity in a cured state.

7. The vehicle control device according to claim 6, wherein
the electrical component is a coil assembly that drives a solenoid valve assembled to the base body, and
the coil assembly includes
a coil, and
the connection terminal electrically connected to the coil.

8. The vehicle control device according to claim 1, wherein
the base body is supported by the vehicle body in a state where the second side surface is disposed on a lower side of the base body.

9. The vehicle control device according to claim 1, wherein
the control board is provided with a controller that controls the movement of the vehicle, and
the controller includes a calculator that calculates a detection value detected by the sensor.
